# EUROPEAN PATENT SPECIFICATION

(11) **EP 4 107 100 B1**
(45) Date of publication and mention of the grant of the patent: **18.11.2026**
(21) Application number: 21710168.2
(22) Date of filing: 15.02.2021
(51) Int. Cl.: B65G 47/90, A47L 15/24, B25J 15/00, B25J 15/02, B25J 15/08, B25J 15/10

(54) **SYSTEM FOR LOADING A CONVEYOR DISHWASHER**
SYSTEM ZUM LADEN EINER FÖRDERBANDGESCHIRRSPÜLMASCHINE
SYSTÈME DE CHARGEMENT D'UN LAVE-VAISSELLE À CONVOYEUR

(30) Priority: 21.02.2020 DE 102020104654
(43) Date of publication of application: 28.12.2022
(73) Proprietor: Illinois Tool Works Inc., Glenview, IL 60025 (US)
(72) Inventor: BOLDT, Adrian, Glenview, IL 60025 (US); PFEFFER, Marco, Glenview, IL 60025 (US); SCHREMPP, Martin, Glenview, IL 60025 (US)
(74) Representative: Meissner Bolte Partnerschaft mbB
(86) International application number: PCT/US2021/018095
(87) International publication number: WO 2021/167859

(56) References cited:
- EP-A1- 2 720 597
- EP-B1- 2 720 597
- WO-A1-2012/173479
- WO-A1-2019/059844
- US-A- 5 088 783
- US-A1- 2009 317 221

## Description

### TECHNICAL FIELD

The present invention generally relates to the sector of commercial dishwashing. The invention relates in particular to a system for loading a dishwasher which is embodied in particular as a commercial conveyor dishwasher. The present invention moreover relates to a conveyor dishwasher having a corresponding loading system.

### BACKGROUND

The conveyor dishwasher according to the invention is in particular a commercial conveyor dishwasher and can be configured as a flight-type dishwasher or as a rack-conveyor dishwasher.

The conveyor dishwasher according to the invention is in particular a commercial conveyor dishwasher and can be configured as a flight-type dishwasher or as a rack-conveyor dishwasher.

Conveyor dishwashers are used in the commercial sector. As opposed to domestic dishwashers in which the washware to be cleaned remains so as to be locationally fixed in the machine during cleaning, conveying of the washware through various treatment zones of the machine takes place in conveyor dishwashers.

In conveyor dishwashers, the washware such as, for example, trays, crockery, pots, glassware, cutlery and other utensils to be cleaned is conveyed through a plurality of treatment zones such as, for example, pre-washing zone(s), main washing zone(s), post-washing zone(s) or pre-rinsing zone(s), respectively, clear-rinsing zone(s), and drying zone(s). A conveyor apparatus which typically has compartments for receiving washware is used for conveying washware in a conveying direction through the conveyor dishwasher. In a flight-type conveyor dishwasher the compartments can be formed by support pins on a conveyor belt of the conveyor apparatus. In rack-conveyor dishwashers, crockery racks in which compartments for receiving the washware to be treated may be configured serve as the conveyor apparatus. It is conceivable herein that the crockery racks are conveyed through the rack-conveyor dishwasher by way of a conveyor installation.

The washware to be cleaned is usually pre-sorted prior to being placed in the conveyor belt. A rack-conveyor dishwasher in which the washware to be treated is supplied to the respective treatment zones so as to be pre-sorted in crockery racks is known from publication US 6 530 996 B2, for example.

Conveyor dishwashers are used in particular in large installations such as school cafeterias and canteens so as to clean large quantities of soiled washware as economically as possible. Several hundred place settings per hour can be cleaned using conveyor dishwashers of the presently known type. Research has shown that each place setting on average is typically composed of a tray, a plate, one or two bowls, a tumbler, and a set of cutlery.

In almost all large catering establishments such as, for example, company canteens or school cafeterias, the washware (crockery, tumblers, cutlery, etc.) used by the diners is returned on trays. The place settings are transported from the return station to the dishwashing section of the kitchen. The transportation of the place settings usually takes place by way of a corresponding infeed conveyor belt. The place setting herein is conveyed by a conveyor belt from the return station to the dishwashing section of the kitchen directly to a loading region of the conveyor dishwasher.

The items of washware are then usually manually removed by operators in the loading or infeed region, respectively, of the conveyor dishwasher and sorted and placed in the conveyor belt of the conveyor dishwasher.

In terms of trays or tray-type items, the pre-sorting usually takes place in such a manner that the set of crockery and cutlery is manually removed from a tray to be cleaned by the operators, and the tray is subsequently stacked ahead of the conveyor apparatus, or in the infeed region (contaminated side) of the conveyor dishwasher, respectively. From time to time, trays from this stack of trays are then sorted according to types, placed in the conveyor belt of the conveyor dishwasher and cleaned.

This procedure in which said trays are sorted according to types have the advantage that trays cannot mask smaller items of washware that are stacked behind the trays in relation to the spray. On account of this procedure, the operating procedure of stacking and unstacking is furthermore highly simplified and more efficient as compared to mixing the washware with the trays to be cleaned.

While the trays from this tray stack are placed in the conveyor belt of the conveyor dishwasher and cleaned so as to be sorted according to types, it is however not possible for other washware such as, for example, plates, bowls or other crockery to be cleaned since the trays that are to be placed in the conveyor belt usually have to be placed in the conveyor belt transversely to the conveying direction and thus fill the entire available area of the conveyor belt. Therefore, relatively much time has to be invested for cleaning trays in comparison to other types of washware.

Furthermore, the operators of the conveyor dishwasher at the machine inlet have to include each tray twice in their personal work sequence: the first time when removing the items of cutlery and crockery from the tray to be cleaned, and the second time when actually placing the trays in the conveyor belt of the conveyor dishwasher.

The manual effort is particularly high in the operating process described. Each item of washware (item of crockery) of each place setting has to be individually manually removed from the tray and placed in the conveyor belt of the dishwasher.

Furthermore, the individual items of cutlery of every place setting have to be manually removed from the tray and likewise fed to the conveyor dishwasher. The afore-described treatment of the actual tray takes place subsequently.

In the case of a machine capacity of several thousand plates per hour, work has in particular to be done as fast and efficiently as possible, on account of which the physical stress of the operators increases.

The document WO 2012/173479 A1, which discloses the preamble of claim 1, relates to a system for cleaning of crockery. Gripping positions of supplied items of the dirty crockery are detected by an electronic vision system. An item of crockery is gripped by a gripper member of a manipulator. The gripper member has a gripper body, and a pair of fingers extending from the gripper body. Each finger has an end carrying a clamping member

The document WO 2019/059844 A1 relates to a dishwashing apparatus for washing dishes having a circular rim or lip. The apparatus comprises a spray nozzle configured to spray a liquid onto a target zone; a first rod; a second rod; and a third rod. The first rod, second rod and third rod each have a screw thread on an outer surface and each being rotatable about a respective longitudinal axis.

The document US 2009/0317221 A1 relates to a pick and place device for picking up and re-positioning an article carried by a support surface.

The document US 5,088,783 A relates to a suspension frame for raising or lowering by a crane or hoist an assembly of depending limbs or legs.

### SUMMARY

Based on this set of issues, the present invention is based on the object of specifying a solution for a conveyor dishwasher of the type mentioned at the outset in which it is
possible for the entire washing and rinsing process to be designed more efficiently, on account of which the working time of the dishwashing operators can in particular be shortened and the consumption of the dishwasher in terms of resources can be reduced.

This object is achieved according to the invention by the subject matter of independent patent claim 1, wherein advantageous refinements thereof are set forth in the corresponding dependent patent claims.

Accordingly, the invention relates to a system for preferably automatically or at least semi-automatically loading an in particular commercial conveyor dishwasher, wherein the system has a feed conveyor belt for feeding washware to a loading region of the conveyor dishwasher, and a loading arrangement for automatically loading the conveyor dishwasher with washware.

In this context it is provided according to the invention that the loading arrangement has a gripper system with at least one parallel gripper, wherein the at least one parallel gripper has automatically adjustable clamping jaws. The clamping jaws are preferably adjustable with an electromotive drive.

A parallel gripper that is activatable by an electromotive drive is preferably consciously proposed as an effector for the gripper system of the loading arrangement, despite electromotively operated parallel grippers of this type in terms of gripper technology being rather unusual for gripping and manipulating gripped items. In terms of gripper technology, pneumatically operated effectors, in particular in the form of so-called suction grippers for handling gripped items are rather primarily proposed for this purpose. The suction grippers known from gripper technology have a flexible suction cup, which delimits a suction chamber that can be connected to a vacuum source, and a front end region which adjoins a suction opening, as well as an opposite rear end region, wherein a suction cup holder is connected to the rear end region of the suction cup.

Suction grippers of this type are typically used so as to be able to suction, lift, and move items to another location. To this end, a suction gripper typically has at least one flexible suction cup, which delimits a suction chamber that can be connected to a vacuum source, and a front end region which encircles a suction opening, as well as an opposite
rear end region. The suction opening of the suction cup is typically formed by a seal lip which bears, or can be brought to bear, respectively, on the surface of the item to be handled and then encloses a suction chamber which is between the suction cup and the surface of the item and can be correspondingly evacuated. On account thereof, the suction cup bears tightly on the surface of the item and pneumatically firmly holds the latter.

In the use of a suction gripper of this type in dishwashing technology it has however been demonstrated that suction grippers are not suitable for handling items of washware because there is the risk, in particular when handling soiled items of washware, that leftover food which is situated on the items of washware to be handled, such as plates and bowls, when evacuating the suction chamber clogs the vacuum lines that are pneumatically connected to the suction chamber such that reliable gripping of the items of washware is no longer guaranteed.

Furthermore, pneumatically activated gripping tongs are known from the field of gripper technology. However, gripping tongs of this type, if at all, can only be used to a limited extent when used as an effector in the loading region of a conveyor dishwasher, because the gripping tongs typically possess only a limited gripping region, this making it impossible for comparatively large items of washware such as, for example, plates, cups or bowls, to be reliably gripped.

A further disadvantage of the pneumatically activated gripping tongs known from the field of gripper technology is to be seen in that said gripping tongs require compressed air as an operating medium, said compressed air typically not being available in dishwashing sections in kitchens. Moreover, pneumatically operated gripping tongs typically enable only two positions, specifically the open position and the closed position, this preventing that pneumatically operated gripping tongs can be used for a multiplicity of different types of washware, in particular of dissimilar sizes.

For this purpose, an electromotively operated parallel gripper is preferably proposed according to the invention as an effector for automatically loading the conveyor dishwasher with washware. In the case of this parallel gripper, with the aid of an electromotive drive the associated clamping jaws are adjustable in an arbitrary manner across a gripping region of the parallel gripper.

The present invention only relates to parallel grippers, the clamping jaws of the latter being automatically adjustable.

A further advantage is to be seen in that the effector embodied as a parallel gripper, in a manner which is easy to implement, can be embodied with a self-locking mechanism such that said effector in the deenergized state firmly holds the gripped item of washware without transitioning to an open position.

The manual handling steps required for loading the conveyor dishwasher can be significantly reduced by the loading system according to the invention, because not only plates but also bowls or else tumblers or other washware can be automatically sorted and placed in the conveyor dishwasher in an efficient manner with the aid of the gripper system.

In this way, manual operating steps and thus the effort in terms of labor by the dishwasher operators can thus overall be saved, because the dishwasher operators ideally no longer have to manually load the conveyor dishwasher. The loading system according to the invention guarantees in particular an ideally ergonomic and user-friendly operation of the conveyor dishwasher, because manual loading of items of washware and in particular of plates or cups, or bowls, respectively, into the conveyor dishwasher is no longer required.

The cleaning outcome of the dishwasher can additionally be improved by the loading system according to the invention, because all of the washware of an established group of washware can be sorted and placed uniformly on a correspondingly assigned conveyor belt of the conveyor dishwasher with the aid of the loading arrangement. Moreover, the unloading process can be simplified because each group of washware can be conveyed through the conveyor dishwasher on a defined conveying track and thus arrives in an already presorted state at the unloading region of the conveyor dishwasher.

In order to be able to sort the washware that has been fed to the loading region of the conveyor dishwasher by way of the feed conveyor belt of the loading system according to the invention according to groups of washware that have been previously established, or are able to be previously established, it is conceivable that the loading system according to the invention has a washware detector device which serves for detecting the type of items of washware (plates, cups, bows, etc.) fed by way of the feed conveyor belt, and to then lift a specific type of washware in a dedicated manner from the feed conveyor belt using the at least one parallel gripper and place in a sorted manner said specific type of washware in a corresponding conveying track of the conveyor dishwasher.

The term "washware detector device) used herein is understood to include any kind of detection device which is conceived for detecting or determining, respectively, the type of washware that is fed by way of the feed conveyor belt. It is in particular conceivable herein that the washware detector device has at least one detector installation by way of which the size, the shaping and/or the material of the items of washware fed by way of the feed conveyor belt can be detected.

According to conceivable implementations, the washware detector device can have at least one detector device that operates in an optical, inductive or capacitive manner, such that the size, the shaping and/or the material of the corresponding item of washware can be detected in order for the type of washware to be identified. However, other types of detectors such as, for example, proximity sensors that operate in an inductive manner, light sensors, light curtains, laser scanners, 3D scanners, cameras, rotary encoders, etc., may however also be considered as a detector installation.

On account of the gripper system of the loading arrangement having at least one parallel gripper it is ensured that, with the exception of items of cutlery, almost all other types of washware can be correspondingly manipulated, that is to say in particular removed from the feed conveyor belt and placed in a sorted manner in a conveying track of the conveyor dishwasher.

As opposed to gripping tongs, the functional principle of parallel grippers is based on the latter having at least two clamping jaws which in a linear movement are movable relative to one another. In this context it is conceivable, for example, that the clamping jaws of the parallel gripper are able to be moved or driven, respectively, by a type of "plunger piston". Alternatively thereto, it is however also conceivable for a linear drive to be chosen as an electromotive drive. Alternatively thereto, a torque which if necessary is generated by an electromotive drive can also be transmitted to the clamping jaws by way of a gear assembly.

The parallel gripper has at least two clamping jaws, which define at least one gripping region, pointing in the direction of an item of washware to be gripped, of the parallel gripper, wherein the at least two clamping jaws are movable relative to one another and preferably also relative to an item of washware to be gripped by the gripper system.

On account of the at least two clamping jaws of the parallel gripper also both being movable relative to the item of washware to be gripped by the gripper system, it is ensured that the washware is not moved during the actual gripping procedure but the clamping jaws contact the item of washware without the latter being displaced in the loading arrangement.

It is advantageous herein for the at least two clamping jaws of the parallel gripper to have a self-centering function. In order for this to be implemented in a particularly simple but nevertheless effective manner, it is provided according to variants of embodiment of the loading system according to the invention that at least one and preferably exactly one of the at least two clamping jaws has two protrusions that are arranged parallel to one another and each protrude perpendicularly to the direction of movement, wherein these protrusions, which occasionally are also referred to as "gripping fingers" are arranged next to one another in a direction perpendicular to the direction of movement.

It is ensured on account of this implementation of the parallel gripper that is simple to realize that an item of washware is acquired by the clamping jaws of the parallel gripper by way of a contact at three points. A self-centering function is automatically implemented on account of the clamping jaws of the parallel grippers being able to be moved relative to one another and relative to the item of washware to be gripped by the gripper system.

In order to achieve that a multiplicity of different types of washware can be reliably handled with the aid of the at least one parallel gripper of the gripper system, it is provided according to the invention that the clamping jaws have three first protrusions that protrude in a first direction perpendicular to the direction of movement and three further second protrusions that protrude
in the first direction perpendicular to the direction of movement, wherein the three first protrusions are arranged further out, with respect to the direction of movement of the clamping jaws, than the three further, second protrusions, and wherein the three first protrusions extend further in the first direction perpendicular to the direction of movement than the three further, second protrusions.

Two different gripping regions can thus be effectively implemented by the parallel gripper in this manner. This widens the field of application of the parallel gripper, or of the loading system according to the invention, respectively, because a multiplicity of different types of washware, and in particular types of washware or items of washware of dissimilar sizes, can be reliably handled by the loading system.

On account of this embodiment it is in particular possible for different (effective) gripping regions to be established by the at least two clamping jaws of the parallel gripper. The aspect that items of washware of dissimilar sizes can be reliably gripped and manipulated with one and the same parallel gripper can thus be taken care of.

According to preferred implementations of the loading system according to the invention it is provided that the parallel gripper is movable in a vertical direction relative to an item of washware to be gripped, in order if necessary to position and align the parallel gripper with respect to the item of washware to be gripped such the item of washware to be cleaned is positionable in a gripping region defined by the clamping jaws of the parallel gripper. To this end, the parallel gripper is preferably connected, or at least able to be connected, to a corresponding manipulator such as, for example, a robot arm.

It is provided in particular in a refinement of the last-mentioned embodiment that the clamping jaws have at least two and preferably exactly three first protrusions that protrude in the first direction perpendicular to the direction of movement and at least two and preferably exactly three second protrusions that protrude in the first direction perpendicular to the direction of movement, wherein, in an open position of the parallel gripper, a spacing between opposite first protrusions is between 350 mm and 270 mm, and wherein, in a closed position of the parallel gripper, a spacing between opposite first protrusions is between 230 mm and 150 mm.

In this way, the parallel gripper is configured for the large variance in terms of plates and bowls arising in dishwashing sections in kitchens. The parallel gripper is in particular suitable for items of washware that differ in terms of shape and size.

For example, the "plate" type of washware includes flat plates, deep-dish plates or soup plates, respectively, and saucers. In observations in the field it has been established that the plate diameter is between 145 mm and 270 mm. Moreover, plates having a round, square and oval shape are used. In the case of bowls, a diameter of 85 mm to 175 mm was measured. As in the case of plates, bowls having a round, oval and a square shape are usually used.

This multiplicity of different types of washware are preferably able to be reliably manipulated using the parallel gripper according to the invention.

In a preferred refinement of the last-mentioned embodiment it is provided that in the open position of the parallel gripper a spacing between opposite second protrusions is preferably between 100 mm and 50 mm, and wherein in the closed position of the parallel gripper a spacing between opposite second protrusions is preferably between 70 mm and 20 mm. This embodiment thus covers the dimensions of the items of washware to be manipulated as detected in the field observations.

A wide spectrum of items of washware to be treated can be covered by the parallel gripper on account of this choice of different gripping regions. This relates in particular to plates, saucers, bowls, tumblers, cups and optionally even pots.

According to another aspect of the loading system (not part of the claimed invention), it is provided that the clamping jaws have at least two and preferably exactly three first protrusions which extend in a first direction perpendicular to the direction of movement, wherein the clamping jaws furthermore each have at least two and preferably exactly three second protrusions which extend in a second direction perpendicular to the direction of movement, wherein the second direction is opposite to the first direction.

This design embodiment of the loading system according to that aspect yet again widens the field of application of the at least one parallel gripper, because a multiplicity of
different gripping regions can be implemented. In this context it is in particular conceivable that the parallel gripper, or at least parts thereof, is mounted so as to be rotatable about an axis of rotation extending parallel to the direction of movement of the clamping jaws in such a way that, selectively or if necessary, the at least one first protrusions of the clamping jaws or the at least one second protrusions of the clamping jaws define the efficient gripping region of the parallel gripper.

In an open position of the parallel gripper, the spacing between the first protrusions herein should differ from the spacing between the second protrusions.

In this context it is advantageous that, in an open position of the parallel gripper, the spacing between the first protrusions is greater than the spacing between the second protrusions, so as to increase the number of gripping regions that can be implemented by way of the parallel gripper.

According to embodiments of the loading system according to the invention it is provided that the clamping jaws of the parallel gripper are coated at least regionally with an elastic material.

By coating the clamping jaws with an elastic material it is guaranteed that the item of washware which is to be gripped and is gripped between the at least two clamping jaws is not damaged, and/or that the clamping jaws are protected. This is particularly advantageous when items of washware which react in a particularly sensitive manner such as, for example tumblers, are to be gripped.

The clamping jaws of the parallel gripper are advantageously coated at least regionally with an elastomer. Hydrogenated nitrile butadiene rubber (HNBR) can be considered as the elastic material. HNBR material has the advantage that this material by virtue of the absence of double bonds is very inert. The durability of the material is thus increased. Moreover, HNBR material is comparatively temperature-resistant on account of which the clamping jaws coated with HNBR can be operated at a temperature of up to 150°C, for example, or be brought in contact with items of washware which have a temperature of up to 150°C, respectively.

It is in particular conceivable that the elastic material is vulcanized onto the clamping jaws so as to configure a coating of elastic material, or that the clamping jaws are over-molded with the elastic material in an injection-molding method.

Vulcanizing means in particular that an intermediate layer between the elastic material and the material of the clamping jaw is provided. The intermediate layer is a suitable binding agent so as to enable a fixed connection between the elastic material and the material of the clamping jaw and in particular so as to avoid that the elastic material becomes porous.

An injection molding method is preferably used when overmolding the clamping jaw with an elastic material, wherein the clamping jaw herein is introduced into a mold and the elastic material is added to the mold in a fluid state such that the elastic material fills a cavity between the injection mold and the clamping jaw. The elastic material thereafter cures in the mold. The mold can subsequently be removed and the clamping jaw over-molded with elastic material can be removed.

According to refinements of the last-mentioned aspect it is provided that the clamping jaws of the parallel gripper each have at least one transverse bore. On account of the at least one transverse bore in the region of the clamping jaws it is achieved that the adhesion of the elastic material is improved when the clamping jaws are being coated with the elastic material. The adhesion of the elastic material on the clamping jaws is in particular improved, specifically in comparison to a case in which the clamping jaws are not any further structured or modified, that is to say substantially smooth. It is in particular provided herein that the elastic material covers the at least one transverse bore.

The invention is by no means limited to loading systems in which at least one parallel gripper having only two clamping jaws is used. Rather, the invention also relates to loading systems having parallel grippers which in each case have a total of three clamping jaws which are movable relative to one another and relative to an item of washware to be gripped by the gripper system, wherein a movement of the three clamping jaws is synchronized.

The clamping jaws of the parallel gripper are advantageously configured to grip an item of washware to be gripped via a friction fit and/or form fit.

According to preferred implementations of the loading system according to the invention it is moreover provided that the electromotive drive of the parallel gripper is embodied in a self-locking manner such that the electromotive drive sets a relative spacing of the clamping jaws from one another in a deenergized state.

The invention furthermore relates to a conveyor dishwasher having at least one conveyor apparatus, preferably in the form of at least one conveyor belt, wherein the conveyor dishwasher is provided in its inflow region with at least one loading system of the afore-described type according to the invention for preferably automatically placing washware in the conveyor apparatus of the conveyor dishwasher.

### BRIEF DESCRIPTION OF THE DRAWINGS

Exemplary embodiments of the solution according to the invention will be described in more detail hereunder with reference to the appended drawings.

In the drawings:
- fig. 1: schematically and in a lateral view shows a first exemplary embodiment of the parallel gripper which is used in the loading system according to the invention;
- fig. 2: schematically shows the parallel gripper according to fig. 1 in a view from below;
- fig. 3A: schematically and in an isometric view shows the parallel gripper according to fig. 1 having a first item of washware gripped by the parallel gripper;
- fig. 3B: schematically and in an isometric view shows the parallel gripper according to fig. 1 having a second item of washware gripped by the parallel gripper;
- fig. 4: schematically and in a lateral view shows a second exemplary embodiment of the parallel gripper according to the invention;
- fig. 5: schematically and in a lateral view shows a third exemplary embodiment of the parallel gripper not according to the present invention;
- fig. 6A: schematically and in an isometric view shows the parallel gripper according to fig. 5, and not according to the invention, having a first item of washware gripped by the parallel gripper; and
- fig. 6B: schematically and in an isometric view shows the parallel gripper according to fig. 5, and not according to the invention, having a second item of washware gripped by the parallel gripper.

### DETAILED DESCRIPTION

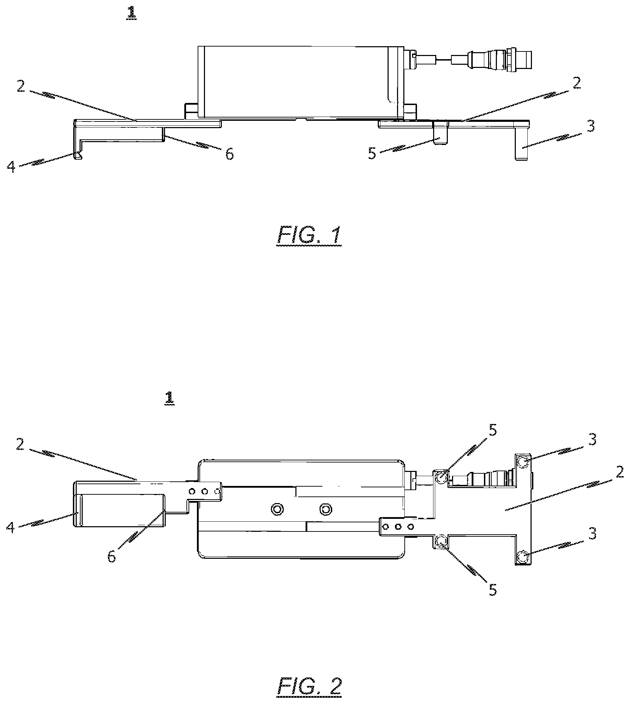

Various embodiments of the parallel gripper 1 associated with the gripper system of the loading arrangement will be described hereunder with reference to the illustrations in fig. 1 to fig. 6.

The parallel grippers 1 of the exemplary embodiments are in each case embodied as electromotively driven parallel grippers 1 and to this end have an electromotive drive which is received in a housing of the parallel gripper 1.

The parallel gripper 1 moreover has a total of two clamping jaws 2 which are each driven by the electromotive drive and are received in corresponding seats. While the parallel grippers 1 in the drawings have in each case only two clamping jaws 2, it is provided according to embodiments (not illustrated) that the parallel gripper 1 may also have three clamping jaws 2 which are received in three coplanar seats.

The clamping jaws 2 are in each case received in the seats in such a manner that said clamping jaws 2 with the aid of the electromotive drive in a direction (= direction of movement L) which is orthogonal to the longitudinal axis of the parallel gripper 1 are displaceable in an alternating manner in both directions between a proximal position and a distal position in terms of the longitudinal axis. In the proximal position of the clamping jaws 2 the parallel gripper 1 is present in the open position, while in the distal position of the clamping jaws 2 the parallel gripper 1 is present in the closed position thereof.

Corresponding means for transmitting the movement of the electromotive drive to the clamping jaws 2 are provided in the housing of the parallel gripper 1. These means are preferably configured in such a manner that the clamping jaws 2 are moved in a synchronous manner when the electromotive drive is activated.

In the embodiments of the parallel gripper 1 illustrated in the drawings it is provided that the parallel gripper 1 has two clamping jaws 2 which define at least one gripping region, pointing in the direction of an item of washware 10 to be gripped, wherein the at least two clamping jaws 2 are movable relative to one another and preferably also relative to an item of washware 10 to be gripped by the gripper system.

In particular, one of the two clamping jaws 2 herein has two protrusions 3, 5 that are arranged parallel to one another and each protrude perpendicularly to the direction of movement L, wherein these protrusions 3, 5 are arranged next to one another in a direction perpendicular to the direction of movement L.

It is provided herein that the parallel gripper 1 is movable in the vertical direction relative to an item of washware 10 to be gripped in order if necessary to position the parallel gripper 1 with respect to the item of washware 10 to be gripped such that the item of washware 10 to be cleaned is positionable in a gripping region defined by the clamping jaws 2 of the parallel gripper 1 and in the direction of the gripping region pointing to the item of washware 10 to be gripped, wherein, for this purpose, the parallel gripper 1 is preferably connected or connectable to a corresponding manipulator, in particular in the form of a robot arm.

An embodiment of the parallel gripper 1 in which the respective clamping jaws 2 have gripping fingers or protrusions 3, 4, 5, 6, respectively, in a stepped arrangement is provided in fig. 1. In this embodiment it is in detail provided that the two clamping jaws 2 have at least two and preferably exactly three first protrusions 3, 4 (gripping fingers) that protrude in a first direction perpendicular to the direction of movement L, and preferably at least two and preferably exactly three further second protrusions 5, 6 that protrude in the first direction perpendicular to the direction of movement L.

It is provided herein that the distal (first) protrusions 3, 4 (disposed toward the outside) extend further in the first direction perpendicular to the direction of movement L than the (proximal) (second) protrusions 5, 6 that are disposed further inside.

In this way, the parallel gripper 1 has two gripping regions that can effectively be utilized and point in the direction of the item of washware 10 to be gripped such that items of washware 10 of dissimilar sizes can be reliably gripped and handle with the aid of the parallel gripper 1.

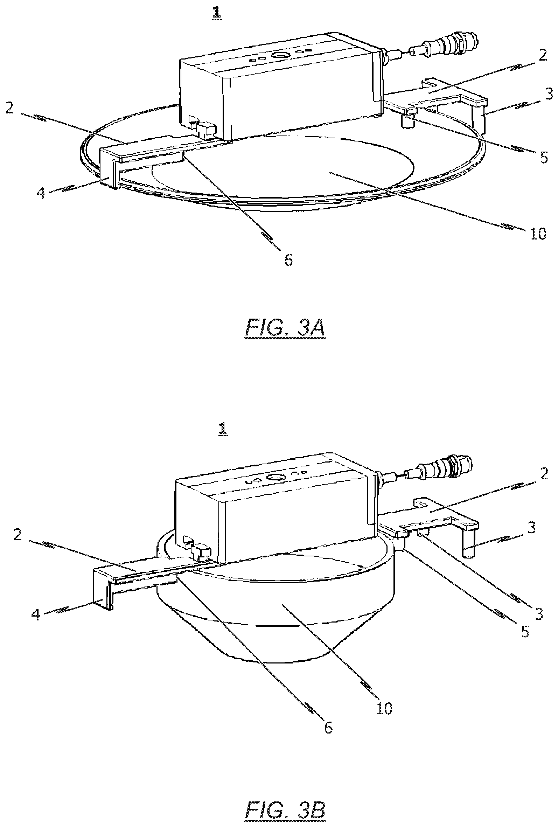

To this extent, reference is also to be made to the illustrations in fig. 3A and fig. 3B, wherein a relatively large item of washware 10 (plate) is gripped with the parallel gripper 1 in fig. 3A, while a relatively small item of washware 10 (bowl) is gripped by the same parallel gripper 1 in fig. 3B.

In the state shown in fig. 3A, the gripping region of the parallel gripper 1 which is defined by the two distally disposed (first) protrusions 3, 4 of the clamping jaws 2 is used, while the gripping region of the parallel gripper 1 which is formed by the two (second) protrusions 5, 6 that are disposed so as to be more proximal is used in fig. 3B.

It is provided in particular in this embodiment that both clamping jaws 2 each have at least two and preferably exactly three first protrusions 3, 4 that protrude in the first direction perpendicular to the direction of movement L, and each at least two and preferably exactly three second protrusions 5, 6 that likewise protrude in the first direction perpendicular to the direction of movement L, wherein, in an open position of the parallel gripper 1, a spacing between the first protrusions 3, 4 is preferably between 350 mm and 270 mm, and wherein, preferably in a closed position of the parallel gripper 1, a spacing between the first protrusions 3, 4 is between 230 mm and 150 mm.

This way, the parallel gripper 1 is configured for the large variance in terms of plates and bowls arising in dishwashing sections in kitchens. The parallel gripper 1 is particularly suitable for items of washware 10 that differ in terms of shape and size. For example, the "plate" type of washware includes flat plates, deep-dish plates or soup plates, respectively, as well as saucers. In field observations it has been established that the plate diameter is between 145 mm and 270 mm. Plates having a round, square and oval shape are moreover used. A diameter of 85 mm to 175 mm has been measured in the case of bowls. As is the case with plates, bowls having a round, oval and a square shape are usually used.

This multiplicity of different types of washware are preferably able to be reliably manipulated by the parallel gripper 1 according to the invention.

In a refinement of the last-mentioned embodiment it is provided that in the open position of the parallel gripper 1 a spacing between the second protrusions 5, 6 is between 100 mm and 50 mm, wherein in the closed position of the parallel gripper 1 a spacing between the second protrusions 5, 6 is between 70 mm and 20 mm. This embodiment thus covers the dimensions of the items of washware 10 to be manipulated as detected in the field observations.

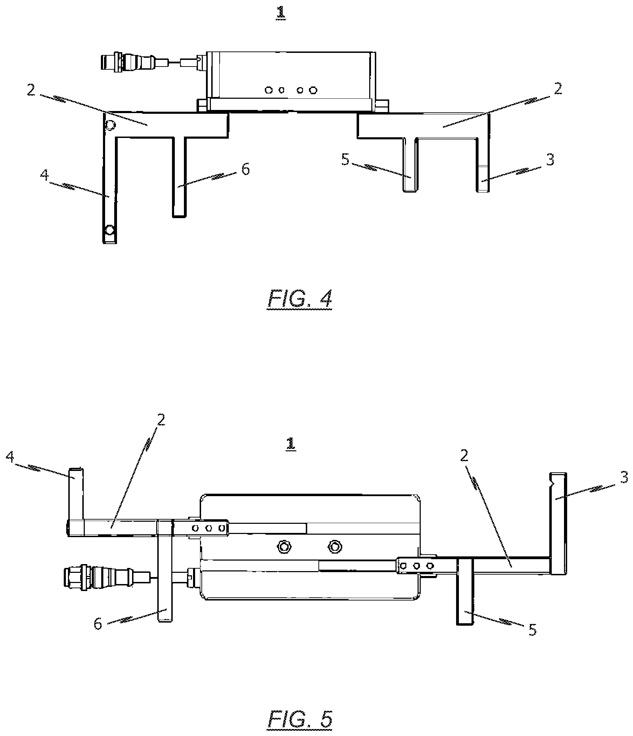

In this context, reference is also to be made to the embodiment of the parallel gripper 1 according to the invention shown in fig. 4.

On account of this choice of the different gripping regions, a wide spectrum of items of washware 10 to be treated can be covered with the parallel gripper 1. This relates in particular to plates, saucers, bowls, tumblers, cups and optionally even pots.

In principle, the item of washware 10 is always gripped by way of the two clamping jaws 2. As already has been indicated, in the case of at least one clamping jaw 2 two gripping fingers/protrusions 3, 5 that are arranged parallel to one another and each protrude perpendicularly to the direction of movement L are used, said two gripping fingers/protrusions 3, 5 when gripping interacting with one further gripping finger/protrusion 4, 6. Three gripping fingers/protrusions 3, 4 or 5, 6, respectively, are thus at all times used for gripping one item of washware, as a consequence of which the item of washware 10 is at all times centered by the three gripping fingers/protrusions 3, 4, or 5, 6, respectively, such that minor deviations can be compensated for.

Moreover, any shape of the item of washware 10 can be gripped by three gripping fingers/protrusions 3, 4, or 5, 6, respectively.

It can be seen by means of the illustrations in fig. 4 that in this embodiment of the parallel gripper 1 according to the invention the protrusions or gripping fingers 3, 4, 5, 6, respectively, of the clamping jaws 2 can be embodied with dissimilar lengths. The length herein is defined by the dimension of the protrusions/fingers 3, 4, 5, 6 in the first direction perpendicular to the direction of movement L.

The embodiment of the parallel gripper 1 not according to the invention shown in fig. 5 is distinguished by an alternating arrangement of the gripping fingers/protrusions 3, 4, 5, 6. Gripping fingers 3, 4, 5, 6 herein are attached in an alternating manner on the two clamping jaws 2. At least two opposite gripping regions are created on account thereof. The one region is suitable for washware of a size of approx. 290 mm to 170 mm, for example, while the opposite region can be used for washware with a size of 170 mm to 50 mm, for example wherein other extents/dimensions of the gripping regions are however also conceivable.

In detail it is provided in the embodiment of the parallel gripper 1 not according to the
invention shown in fig. 5 that the two clamping jaws 2 have preferably exactly three first protrusions/gripping fingers 3, 4 which extend in a first direction perpendicular to the direction of movement L, and that the two clamping jaws 2 furthermore preferably have exactly three second protrusions/gripping fingers 5, 6 which extend in a second direction perpendicular to the direction of movement L, wherein the second direction is opposite to the first direction.

It is provided herein that the parallel gripper 1, or at least parts thereof, are mounted so as to be rotatable about an axis of rotation extending parallel to the direction of movement L in such a way that, selectively or if necessary, the first protrusions 3, 4 of the clamping jaws 2, or the second protrusions 5, 6 of the clamping jaws 2, define the gripping region pointing in the direction of the item of washware 10 to be gripped.

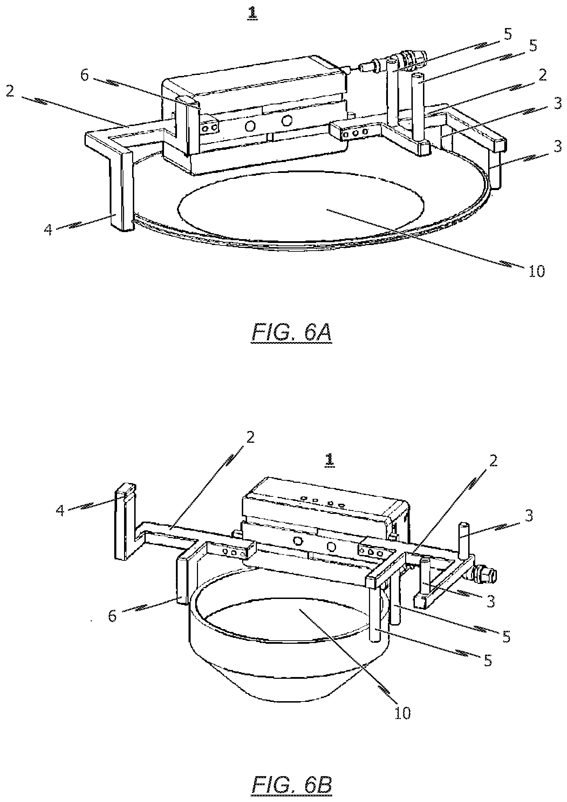

The gripping of large or small, respectively, washware 10 is illustrated in fig. 6A and fig. 6B, not according to the invention. It can moreover be seen that each gripper side has in each case at least two, preferably three, gripping fingers 3, 4, 5, 6. As is the case in the stepped embodiment described with reference to fig. 1, the washware 10 to be gripped in the parallel gripper 1 is centered by way of three gripping fingers 3, 4, or 5, 6, respectively, and deviations in terms of position are compensated for.

In the embodiments of the parallel gripper 1 according to the invention shown in the drawings it is in particular provided that the clamping jaws 2 of the parallel gripper 1 are configured to grip an item of washware 10 to be gripped via a friction fit and/or form-fit.

It is furthermore advantageous that the electromotive drive of the parallel gripper 1 is embodied in a self-locking manner such that the electromotive drive sets a relative spacing of the clamping jaws 2 from one another in a deenergized state.

The invention is not limited to the embodiments of the parallel gripper 1 shown in the drawings but is a result of all of the features disclosed herein viewed in combination.

In this context it is in particular conceivable that the clamping jaws 2 of the parallel gripper 1 are coated at least regionally with an elastic material. It is moreover conceivable that the parallel gripper 1 has a total of three clamping jaws 2 which are movable relative to one another and relative to an item of washware 10 to be gripped by the gripper system, wherein a movement of the three clamping jaws 2 is synchronized.

The invention furthermore relates to a conveyor dishwasher which is not shown in the drawings and has at least one conveyor apparatus, preferably in the form of at least one conveyor belt, wherein the conveyor dishwasher is provided in its inflow region with at least one loading system for preferably automatically placing washware in the conveyor apparatus of the conveyor dishwasher. The loading system has at least one parallel gripper 1 of the afore-described type.

## Claims

1. A system for loading a dishwasher, which is embodied as an in particular commercial conveyor dishwasher, wherein the system has the following:
- a feed conveyor belt for feeding washware to a loading region of the conveyor dishwasher; and
- a loading arrangement for automatically loading the conveyor dishwasher with washware,
wherein the loading arrangement has a gripper system with at least one parallel gripper (1), wherein the at least one parallel gripper (1) has automatically adjustable clamping jaws (2) and preferably clamping jaws (2) that are adjustable with an electromotive drive,
wherein the parallel gripper (1) has two clamping jaws (2), which define at least one gripping region, pointing in the direction of an item of washware (10) to be gripped, of the parallel gripper (1), wherein the two clamping jaws (2) are movable in a direction of movement relative to one another and preferably also relative to an item of washware (10) to be gripped by the gripper system,
**characterized in that**
the clamping jaws (2) have three first protrusions (3, 4) that protrude in a first direction perpendicular to the direction of movement and three further second protrusions (5, 6) that protrude in the first direction perpendicular to the direction of movement, wherein the three first protrusions (3, 4) are arranged further out, with respect to the direction of movement of the clamping jaws (2), than the three further, second protrusions (5, 6), and wherein the three first protrusions (3, 4) extend further in the first direction perpendicular to the direction of movement than the three further, second protrusions (5, 6).

2. The system as claimed in claim 1,
wherein at least one and preferably exactly one of the at least two clamping jaws (2) has two protrusions (3; 5) that are arranged parallel to one another and each protrude perpendicularly to the direction of movement, wherein these protrusions (3; 5) are arranged next to one another in a direction perpendicular to the direction of movement of the clamping jaws (2).

3. The system as claimed in claim 1 or 2,
wherein the parallel gripper (1) is movable in a vertical direction relative to an item of washware (10) to be gripped, in order if necessary to position the parallel gripper (1) with respect to the item of washware (10) to be gripped such that the item of washware (10) to be cleaned is positionable in a gripping region defined by the clamping jaws (2) of the parallel gripper (1), wherein, for this purpose, the parallel gripper (1) is connected or connectable preferably to a corresponding manipulator, in particular in the form of a robot arm.

4. The system as claimed in one of claims 1 to 3,
wherein, in an open position of the parallel gripper (1), a spacing between opposite first protrusions (3, 4) is between 350 mm and 270 mm, and wherein, in a closed position of the parallel gripper (1), a spacing between opposite first protrusions (3, 4) is between 230 mm and 150 mm, wherein, in the open position of the parallel gripper (1), a spacing between opposite second protrusions (5, 6) is preferably between 100 mm and 50 mm, and wherein, in the closed position of the parallel gripper (1), a spacing between opposite second protrusions (5, 6) is preferably between 70 mm and 20 mm.

5. The system as claimed in one of claims 1 to 4,
wherein the clamping jaws (2) of the parallel gripper (1) are coated at least regionally with an elastic material.

6. The system as claimed in one of claims 1 to 5,
wherein the parallel gripper (1) has a total of three clamping jaws (2), which are movable relative to one another and relative to an item of washware (10) to be gripped by the gripper system, wherein a movement of the three clamping jaws (2) is synchronized.

7. The system as claimed in one of claims 1 to 6,
wherein the clamping jaws (2) of the parallel gripper (1) are configured to grip an item of washware (10) to be gripped via a friction fit and/or form fit.

8. The system as claimed in one of claims 1 to 7,
wherein the electromotive drive of the parallel gripper (1) is embodied in a self-locking manner such that the electromotive drive sets a relative spacing of the clamping jaws (2) from one another in a deenergized state.

9. The system as claimed in one of claims 1 to 8,
wherein the clamping jaws (2) of the parallel gripper (1) are embodied in an identical manner to one another.

10. A conveyor dishwasher having at least one conveyor apparatus, preferably in the form of at least one conveyor belt, wherein the conveyor dishwasher is provided in its inflow region with at least one system as claimed in one of claims 1 to 9 for preferably automatically placing washware in the conveyor apparatus of the conveyor dishwasher.

## Patentansprüche

1. System zum Beladen einer Geschirrspülmaschine, das insbesondere als gewerbliche Durchlaufgeschirrspülmaschine ausgebildet ist, wobei das System Folgendes aufweist:
- ein Zuführförderband zum Zuführen von Spülgut zu einem Ladebereich der Durchlaufgeschirrspülmaschine; und
- eine Beladeanordnung zum automatischen Beladen der Durchlaufgeschirrspülmaschine mit Spülgut,
wobei die Beladeanordnung ein Greifersystem mit mindestens einem Parallelgreifer (1) aufweist, wobei der mindestens eine Parallelgreifer (1) automatisch verstellbare Klemmbacken (2) und vorzugsweise mit einem elektromotorischen Antrieb verstellbare Klemmbacken (2) aufweist,
wobei der Parallelgreifer (1) zwei Klemmbacken (2) aufweist, die zumindest einen in Richtung eines zu greifenden Spülgutartikels (10) weisenden Greifbereich des Parallelgreifers (1) definieren, wobei die beiden Klemmbacken (2) in einer Bewegungsrichtung relativ zueinander und vorzugsweise auch relativ zu einem von dem Greifersystem zu greifenden Spülgutartikel (10) bewegbar sind,
**dadurch gekennzeichnet, dass**
die Klemmbacken (2) drei erste Vorsprünge (3, 4), die in einer ersten Richtung senkrecht zu der Bewegungsrichtung vorstehen, und drei weitere zweite Vorsprünge (5, 6), die in der ersten Richtung senkrecht zu der Bewegungsrichtung vorstehen, aufweisen, wobei die drei ersten Vorsprünge (3, 4) weiter nach außen, bezogen auf die Bewegungsrichtung der Klemmbacken (2), angeordnet sind als die drei weiteren zweiten Vorsprünge (5, 6), und wobei sich die drei ersten Vorsprünge (3, 4) in der ersten Richtung senkrecht zu der Bewegungsrichtung weiter erstrecken als die drei weiteren zweiten Vorsprünge (5, 6).

2. System nach Anspruch 1,
Dabei weist mindestens eine, vorzugsweise genau eine der mindestens zwei Klemmbacken (2) zwei parallel zueinander angeordnete und jeweils senkrecht zur Bewegungsrichtung vorstehende Vorsprünge (3; 5) auf, wobei diese Vorsprünge (3; 5) in einer Richtung senkrecht zur Bewegungsrichtung der Klemmbacken (2) nebeneinander angeordnet sind.

3. System nach Anspruch 1 oder 2,
wobei der Parallelgreifer (1) relativ zu einem zu greifenden Spülgutartikel (10) in vertikaler Richtung bewegbar ist, um den Parallelgreifer (1) gegebenenfalls in Bezug auf den zu greifenden Spülgutartikel (10) so zu positionieren, dass der zu reinigende Spülgutartikel (10) in einem durch die Klemmbacken (2) des Parallelgreifers (1) definierten Greifbereich positionierbar ist, wobei der Parallelgreifer (1) zu diesem Zweck vorzugsweise mit einem entsprechenden Manipulator, insbesondere in Form eines Roboterarms, verbunden ist oder verbindbar ist.

4. System nach einem der Ansprüche 1 bis 3,
wobei in einer offenen Position des Parallelgreifers (1) ein Abstand zwischen gegenüberliegenden ersten Vorsprüngen (3, 4) zwischen 350 mm und 270 mm beträgt, und wobei in einer geschlossenen Position des Parallelgreifers (1) ein Abstand zwischen gegenüberliegenden ersten Vorsprüngen (3, 4) zwischen 230 mm und 150 mm beträgt, wobei in der offenen Position des Parallelgreifers (1) ein Abstand zwischen gegenüberliegenden zweiten Vorsprüngen (5, 6) vorzugsweise zwischen 100 mm und 50 mm beträgt, und wobei in der geschlossenen Position des Parallelgreifers (1) ein Abstand zwischen gegenüberliegenden zweiten Vorsprüngen (5, 6) vorzugsweise zwischen 70 mm und 20 mm beträgt.

5. System nach einem der Ansprüche 1 bis 4,
wobei die Klemmbacken (2) des Parallelgreifers (1) zumindest bereichsweise mit einem elastischen Material beschichtet sind.

6. System nach einem der Ansprüche 1 bis 5,
wobei der Parallelgreifer (1) insgesamt drei Klemmbacken (2) aufweist, die relativ zueinander und relativ zu einem durch das Greifersystem zu greifenden Spülgutartikel (10) bewegbar sind, wobei eine Bewegung der drei Klemmbacken (2) synchronisiert ist.

7. System nach einem der Ansprüche 1 bis 6,
wobei die Klemmbacken (2) des Parallelgreifers (1) so eingerichtet sind, dass sie einen durch das Greifersystem zu greifenden Spülgutartikel (10) über Reibschluss und/oder Formschluss greifen.

8. System nach einem der Ansprüche 1 bis 7,
wobei der elektromotorische Antrieb des Parallelgreifers (1) derart selbsthemmend ausgebildet ist, dass der elektromotorische Antrieb im stromlosen Zustand einen relativen Abstand der Klemmbacken (2) voneinander einstellt.

9. System nach einem der Ansprüche 1 bis 8,
wobei die Klemmbacken (2) des Parallelgreifers (1) identisch zueinander ausgebildet sind.

10. Durchlaufgeschirrspülmaschine, die mindestens eine Fördervorrichtung aufweist, vorzugsweise in Form mindestens eines Förderbandes, wobei die Durchlaufgeschirrspülmaschine in ihrem Einlaufbereich mit mindestens einem System nach einem der Ansprüche 1 bis 9 zum vorzugsweise automatischen Einlegen von Spülgut in die Fördervorrichtung der Durchlaufgeschirrspülmaschine versehen ist.

## Revendications

1. Système de chargement d'un lave-vaisselle, qui est réalisé en tant que lave-vaisselle à convoyeur notamment commercial, dans lequel le système a les éléments suivants :
- une bande de convoyeur d'approvisionnement pour approvisionner de la vaisselle vers une région de chargement du lave-vaisselle à convoyeur ; et
- un agencement de chargement pour charger automatiquement le lave-vaisselle à convoyeur avec de la vaisselle,
dans lequel l'agencement de chargement comporte un système de pinces avec l'au moins une pince parallèle (1), dans lequel l'au moins une pince parallèle (1) comporte des mâchoires de serrage (2) réglables automatiquement et, de préférence, des mâchoires de serrage (2) réglables au moyen d'un entraînement électromoteur,
dans lequel la pince parallèle (1) comporte deux mâchoires de serrage (2), qui définissent l'au moins une zone de préhension, orientée dans la direction d'un article de vaisselle (10) à saisir, de la pince parallèle (1), dans lequel les deux mâchoires de serrage (2) sont mobiles l'une par rapport à l'autre dans une direction de déplacement et, de préférence, également par rapport à un article de vaisselle (10) devant être saisi par le système de pinces,
**caractérisé en ce que**
les mâchoires de serrage (2) ont trois premières protubérances (3, 4) qui font saillie dans une première direction perpendiculaire à la direction de déplacement et trois autres deuxièmes protubérances (5, 6) qui font saillie dans la première direction perpendiculaire à la direction de déplacement, dans lequel les trois premières protubérances (3, 4) sont agencées plus loin vers l'extérieur, par rapport à la direction de déplacement des mâchoires de serrage (2), que les trois autres, deuxièmes protubérances (5, 6), et dans lequel les trois premières protubérances (3, 4) s'étendent plus loin dans la première direction perpendiculaire à la direction de déplacement que les trois autres, deuxièmes protubérances (5, 6).

2. Système selon la revendication 1,
dans lequel l'au moins une et de préférence exactement une des au moins deux mâchoires de serrage (2) a deux saillies (3 ; 5) qui sont agencées parallèlement l'une à l'autre et font chacune saillie perpendiculairement à la direction de déplacement, dans lequel ces saillies (3 ; 5) sont agencées l'une à côté de l'autre dans une direction perpendiculaire à la direction de déplacement des mâchoires de serrage (2).

3. Système selon la revendication 1 ou 2,
dans lequel la pince parallèle (1) est mobile dans une direction verticale par rapport à un article de vaisselle (10) à saisir, afin de positionner si nécessaire la pince parallèle (1) par rapport à l'article de vaisselle (10) à saisir de telle sorte que l'article de vaisselle (10) à nettoyer puisse être positionné dans une zone de préhension définie par les mâchoires de serrage (2) de la pince parallèle (1), dans lequel, à cette fin, la pince parallèle (1) est reliée ou raccordable, de préférence, à un manipulateur correspondant, notamment sous la forme d'un bras de robot.

4. Système selon l'une quelconque des revendications 1 à 3,
où, dans une position ouverte de la pince parallèle (1), un espacement entre des premières saillies opposées (3, 4) est compris entre 350 mm et 270 mm, et où, dans une position fermée de la pince parallèle (1), un espacement entre des premières saillies opposées (3, 4) est compris entre 230 mm et 150 mm, où, dans la position ouverte de la pince parallèle (1), un espacement entre des deuxièmes saillies opposées (5, 6) est de préférence compris entre 100 mm et 50 mm, et où, dans une position fermée de la pince parallèle (1), un espacement entre des deuxièmes saillies opposées (5, 6) est de préférence compris entre 70 mm et 20 mm.

5. Système selon l'une quelconque des revendications 1 à 4, dans lequel les mâchoires de serrage (2) de la pince parallèle (1) sont revêtues d'un matériau élastique, au moins dans des zones.

6. Système selon l'une quelconque des revendications 1 à 5,
dans lequel la pince parallèle (1) a un total de trois mâchoires de serrage (2), qui sont mobiles les unes par rapport aux autres et par rapport à un article de vaisselle (10) devant être saisi par le système de pinces, dans lequel un mouvement des trois mâchoires de serrage (2) est synchronisé.

7. Système selon l'une quelconque des revendications 1 à 6, dans lequel les mâchoires de serrage (2) de la pince parallèle (1) sont configurées pour saisir un article de vaisselle (10) à saisir par liaison par frottement et/ou par complémentarité de forme.

8. Système selon l'une quelconque des revendications 1 à 7,
dans lequel l'entraînement électromoteur de la pince parallèle (1) est réalisé d'une manière autobloquante de telle sorte que, dans un état hors tension, l'entraînement électromoteur maintient un espacement relatif des mâchoires de serrage (2) l'une par rapport à l'autre.

9. Système selon l'une quelconque des revendications 1 à 8, dans lequel les mâchoires de serrage (2) de la pince parallèle (1) sont réalisées de manière identique les unes aux autres.

10. Lave-vaisselle à convoyeur avec au moins un dispositif de transport, de préférence sous la forme d'au moins une bande transporteuse, **caractérisé en ce que** le lave-vaisselle à convoyeur est pourvu, dans sa zone d'entrée, de l'au moins un système selon l'une des revendications 1 à 9 pour la mise en place de préférence automatique de la vaisselle dans le dispositif de transport du lave-vaisselle à convoyeur.
